# FASCICULE DE BREVET EUROPEEN

(11) **EP 2 359 090 B1**
(45) Date de publication et mention de la délivrance du brevet: **08.01.2014**
(21) Numéro de dépôt: 09760139.7
(22) Date de dépôt: 23.11.2009
(51) Int. Cl.: G01B 11/00, G01B 11/03, G01S 17/42, G01S 17/48, G01S 17/66, G01S 7/481, G01S 7/491

(54) **DISPOSITIF ET PROCEDE DE MESURE DE LA POSITION D'AU MOINS UN OBJET EN MOUVEMENT DANS UN REPERE A TROIS DIMENSIONS**
EINRICHTUNG UND VERFAHREN ZUR MESSUNG DER POSITION MINDESTENS EINES BEWEGLICHEN OBJEKTS IN EINEM DREIDIMENSIONALEN KOORDINATENSYSTEM
DEVICE AND METHOD FOR MEASURING THE POSITION OF AT LEAST ONE MOVING OBJECT IN A THREE-DIMENSIONAL COORDINATE SYSTEM

(30) Priorité: 24.11.2008 FR 0857946
(43) Date de publication de la demande: 24.08.2011
(73) Titulaire: Commissariat à l'Énergie Atomique et aux Énergies Alternatives, 75015 Paris (FR)
(72) Inventeur: SOUVESTRE, Florent, F-92260 Fontenay-aux-Roses (FR); HAFEZ, Moustapha, F-94110 Arcueil (FR)
(74) Mandataire: Ilgart, Jean-Christophe
(86) Numéro de dépôt international: PCT/EP2009/065600
(87) Numéro de publication internationale: WO 2010/058001

(56) Documents cités:
- WO-A-2007/129047
- US-A- 4 427 880
- US-A1- 2006 222 314

## Description

### DOMAINE TECHNIQUE

L'invention concerne un dispositif et un procédé de mesure de la position d'au moins un objet, ou cible, en mouvement dans un repère à trois dimensions, en utilisant une matrice de sources laser indépendantes.

### ÉTAT DE LA TECHNIQUE ANTÉRIEURE

La technologie laser présente de nombreuses propriétés avantageuses : une robustesse élevée aux conditions externes : champs magnétiques, lumières, ondes acoustiques, ... due à sa haute densité de puissance et à sa sélectivité ; une précision élevée due à sa directivité ; et une largeur de bande étendue due à la vitesse de fonctionnement élevée des dispositifs optroniques. De telles caractéristiques font que la technologie laser est particulièrement adaptée aux besoins de la métrologie. Toutefois, cette technologie conduit à des dispositifs de poursuite très coûteux lorsque ceux-ci atteignent une très haute précision : inférieure à 25 µm.

Dans les dispositifs de l'art connu, les systèmes de caméras passives sensibles à la couleur requièrent des conditions lumineuses contrôlées et doivent être calibrées. De plus, la discrimination des cibles nécessite des algorithmes complexes et gourmands en ressources matériel (« hardware ») et logiciel (« software »). La robustesse à l'égard des conditions lumineuses est améliorée grâce à des caméras sensibles à la lumière infrarouge qu'elles émettent sur des marqueurs rétro-réfléchissants.

Un dispositif de poursuite laser de l'art connu décrit dans le document référencé [1] en fin de description, qui est un dispositif de métrologie laser de haute précision et de haute dynamique, nécessite d'utiliser des marqueurs spécifiques et onéreux (par exemple un prisme coin de cube). L'ensemble, qui est dédié à la métrologie dans le domaine industriel, n'est pas utilisable pour une capture de mouvement dans le contexte d'une interaction homme-machine.

Les documents de l'art connu référencés [2] et [3] en fin de description, décrivent une interface laser sans marqueur, dédiée à une interaction homme-machine. Ces documents décrivent plus précisément un dispositif de poursuite utilisant une diode laser, des miroirs de guidage et un seul photodétecteur non-imageur. La poursuite est basée sur l'analyse d'un signal temporel correspondant à la quantité de lumière rétrodiffusée produite pendant un balayage circulaire rapide autour de la position présumée de l'objet. Malgré la simplicité technique de ce dispositif, l'ensemble de balayage employé, constitué par un moteur galvanométrique, est gourmand en énergie et très onéreux en raison de la haute dynamique et de la précision nécessaires. De plus, le champ de mesure se révèle limité par la course des miroirs montés sur les moteurs galvanométriques ainsi que par l'angle d'observation restreint du détecteur.

L'invention a pour objet de pallier ces inconvénients en proposant un dispositif et un procédé de mesure travaillant dans un domaine de précision millimétrique pour une interface homme-machine, en permettant la mesure du déplacement d'au moins un objet, sans contact et sans marqueur, sans tenir compte du milieu environnant, avec un coût peu élevé et une faible consommation permettant l'usage de batteries.

### EXPOSÉ DE L'INVENTION

L'invention concerne un dispositif de mesure de la position d'au moins un objet en mouvement dans un repère à trois dimensions, comprenant:
- au moins une tête optique qui comprend une matrice de sources laser indépendantes délivrant des faisceaux laser collimatés, disposées autour d'un photodétecteur central à une seule cellule sensible,
- au moins une base mobile à deux degrés de liberté en rotation sur laquelle cette matrice est fixée,
- une électronique de commande comprenant :
- des moyens de commutation série des sources laser pour localiser l'objet, caractérisé en ce que l'électronique de commande comprend:
- des moyens d'ajustement continu des angles de la base mobile dans lesdits degrés de liberté pour aligner le centre du photodétecteur avec le centre de l'objet en centrant l'empreinte formée sur l'objet.

Dans un premier mode de réalisation, la base mobile comprend deux motoréducteurs montés en configuration « tilt/pan ».

Dans un second mode de réalisation la base mobile comprend une liaison mécanique de type cardan. Une matrice de telles bases mobiles peut permettre alors de suivre plusieurs cibles.

Avantageusement, la matrice de sources laser est une matrice de type VCSEL et les sources laser sont des diodes laser. La tête optique peut ainsi comprendre :
- des diodes laser collimatées,
- une photodiode,
- un multiplexeur analogique,
- un amplificateur et inverseur de transimpédance,
- un circuit de commande.

Avantageusement, l'électronique de commande comprend :
- un microcontrôleur,
- un convertisseur numérique-analogique,
- un convertisseur analogique-numérique,
- un module d'entrée/sortie digital,
- un module de communication,
- un circuit de commande de régulation et de puissance.

Avantageusement, le dispositif de l'invention comprend une matrice de lentilles positionnée devant la matrice de sources laser et déplaçable linéairement devant celle-ci.

L'invention concerne également un procédé de mesure de la position d'au moins un objet en mouvement dans un repère à trois dimensions à l'aide d'un dispositif de mesure de la position de cet au moins un objet comprenant :
- au moins une tête optique qui comprend une matrice de sources laser indépendantes délivrant des faisceaux laser collimatés, disposées autour d'un photodétecteur central à une seule cellule sensible,
- au moins une base mobile à deux degrés de liberté en rotation à laquelle cette matrice est fixée, comprenant en outre:
- une étape de scrutation statique et locale avec commutation des sources lasers pour localiser l'objet,
caractérisé en ce qu'il comprend
- une étape de poursuite globale ce cet au moins un objet assurée par la consultation des deux axes d'une base mobile, dans lesdits degrés de liberté, de ladite matrice pour ajuster en continu les angles de cette base mobile afin d'aligner le centre du photodétecteur avec le centre de l'objet en centrant l'empreinte formée sur l'objet.

Avantageusement, ce procédé comprend, en outre, une étape de mesure de profondeur réalisée à l'aide d'une méthode de télémétrie par temps de vol.

L'invention peut avoir de nombreuses applications dans le domaine de la réalité virtuelle et plus généralement des interactions homme-machine, c'est-à-dire toutes les applications industrielles nécessitant la mesure de trajectoire d'une cible en milieu environnemental non-contrôlé.

### BRÈVE DESCRIPTION DES DESSINS

La figure 1 illustre un premier mode de réalisation du dispositif de l'invention.
La figure 2 illustre une vue en coupe de la tête optique du dispositif de l'invention illustré sur la figure 1.
La figure 3 illustre la disposition des différentes sources laser d'une matrice dans cette tête optique.
Les figures 4 à 7 illustrent différentes configurations d'empreintes laser.
Les figures 8 à 11 illustrent différentes positions entre la cible et la tête optique.
Les figures 12A et 12B illustrent respectivement les caractéristiques courant/tension et le schéma électrique du multiplexage des diodes laser.
La figure 13 illustre l'algorithme de traitement de la tête optique.
Les figures 14A, 14B et 15 illustrent le fonctionnement de la base mobile dans le premier mode de réalisation du dispositif de l'invention.
Les figures 16A et 16B présentent un second mode de réalisation du dispositif de l'invention avec une base mobile à deux degrés de liberté. La figure 17 présente une configuration en matrice de ce second mode de réalisation permettant le suivi de plusieurs cibles.
Les figures 18A et 18B illustrent le déplacement linéaire d'une matrice de lentilles positionnées face aux sources laser.
La figure 19 illustre une architecture générale de l'électronique commune aux deux modes de réalisation du dispositif de l'invention.
La figure 20 illustre schématiquement deux boucles d'asservissement permettant de contrôler les deux actionneurs commun aux deux modes de réalisation du dispositif de l'invention (Les boucles d'asservissements ainsi que la structure sont similaires pour les deux modes de réalisation de l'invention).

### EXPOSÉ DÉTAILLÉ DE MODES DE RÉALISATION PARTICULIERS

L'invention concerne un dispositif de mesure de la position d'un objet, ou cible, en mouvement dans un repère à trois dimensions. Ce dispositif comprend une matrice de sources laser indépendantes, orientée grâce à une base mobile à deux degrés de liberté en rotation. Avantageusement, cette matrice est du type VCSEL, (i.e. « Vertical Cavity Surface Emitting Laser »), comme décrit dans le document référencé [4]. La capture de mouvement se décompose en une étape de mesure statique et locale grâce aux lasers collimatés de la matrice, une étape de mesure globale assurée par la consultation de la position angulaire des deux axes de la base mobile, et éventuellement une étape de mesure de la profondeur réalisée à l'aide d'une méthode de télémétrie par temps de vol. Une telle mesure de profondeur basée sur un procédé à déphasage de phase est décrite dans le document référencé [5].

Ainsi, dans le dispositif de l'invention, l'opération de scrutation rapide, réalisée par des moteurs galvanométriques dans les documents référencés [2] et [3], est obtenue grâce à la mise en circuit successive des sources lasers de la matrice, ce qui permet de réaliser ainsi une scrutation statique. La matrice de sources laser est ensuite orientée de manière à centrer l'empreinte ainsi formée sur la cible. En mesurant la position de la base mobile qui oriente cette matrice, on remonte à la position de la cible. Une méthode de temps de vol peut permettre, ensuite, une mesure de la profondeur (distance) de la cible.

L'usage d'une matrice VCSEL à faible coût permet d'éviter d'utiliser un dispositif électromécanique de haute précision souvent onéreux. Elle permet une scrutation locale statique alors que le mouvement global de suivi de la cible peut être assuré par des actionneurs plus couramment utilisés tels que des moteurs électriques ou autres actionneurs de performances moins élevées en terme de précision et de dynamique.

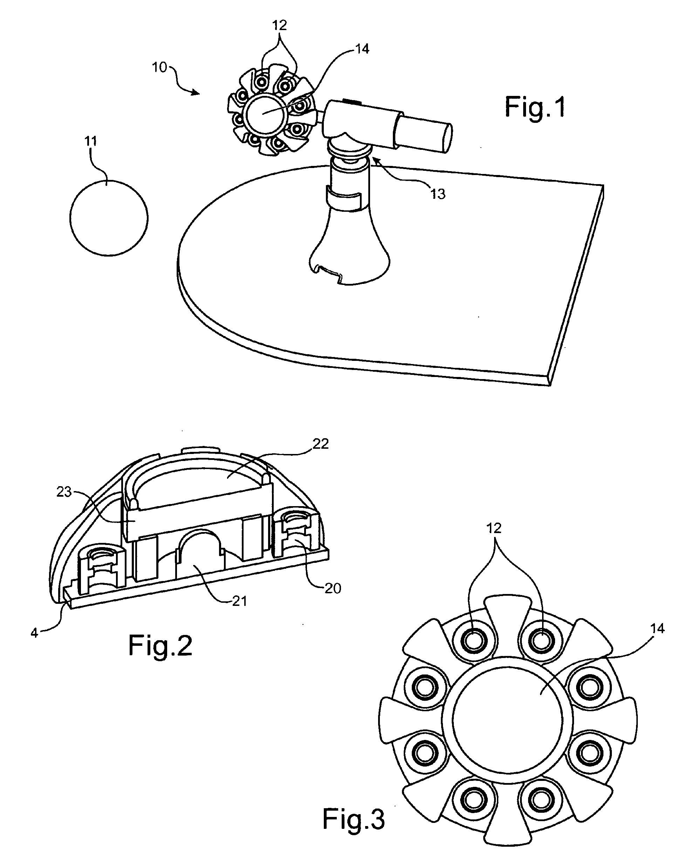

Dans un premier mode de réalisation avantageux, le dispositif de l'invention comprend une tête optique de scrutation (« scanning head ») locale 10, qui, comme illustré sur la figure 1, comprend un réseau de diodes laser 12 disposée autour d'un photodétecteur central à une seule cellule sensible 14 sur la base mobile 13. Cette base mobile 13 comprend deux motoréducteurs montés en configuration « tilt/pan » qui offrent ainsi deux degrés de liberté en rotation.

Une stratégie de commutation série de ces diodes laser permet de localiser la cible identifiée. La tête optique 10 fixée sur la base mobile 13 permet un déplacement selon deux axes, sur 180° pour l'axe horizontal et sur 360° pour l'axe vertical, motorisés avec retour de position pour les besoins de poursuite, permettant un ajustement continu des angles « tilt/pan » de sorte que le centre du photodétecteur 14 reste aligné avec le centre de l'objet 11, ou cible, poursuivi.

Le découplage des fonctions de scrutation et de poursuite permet, par rapport aux dispositifs de l'art antérieur, de réduire les coûts et la consommation en énergie du système.

On va à présent considérer successivement ces fonctions de scrutation locale puis de poursuite (« tracking ») globale.

### Scrutation locale

Le dispositif de l'invention permet la détection dite « locale » de la cible. La tête optique 10 contient les sources laser ponctuelles 12, par exemple des diodes laser, et l'unique photodétecteur 14 surmonté d'un filtrage optique. Le conditionnement des signaux d'émission et de réception est assuré par le biais d'une électronique à faible encombrement. La figure 2 illustre ainsi une vue en coupe d'un exemple de tête optique 10, avec :
- une diode laser collimatée 20,
- une photodiode 21,
- un filtre rouge 22,
- un filtre infrarouge 23,
- une carte électronique de pré-conditionnement 24.

Les sources laser 12 sont disposées en cercle comme illustré sur la figure 3 et émettent des faisceaux collimatés et parallèles. Le photo-détecteur 14, situé au milieu de ces sources laser, peut être une photodiode, par exemple une photodiode classique, une photodiode PIN ou une photodiode à avalanche.

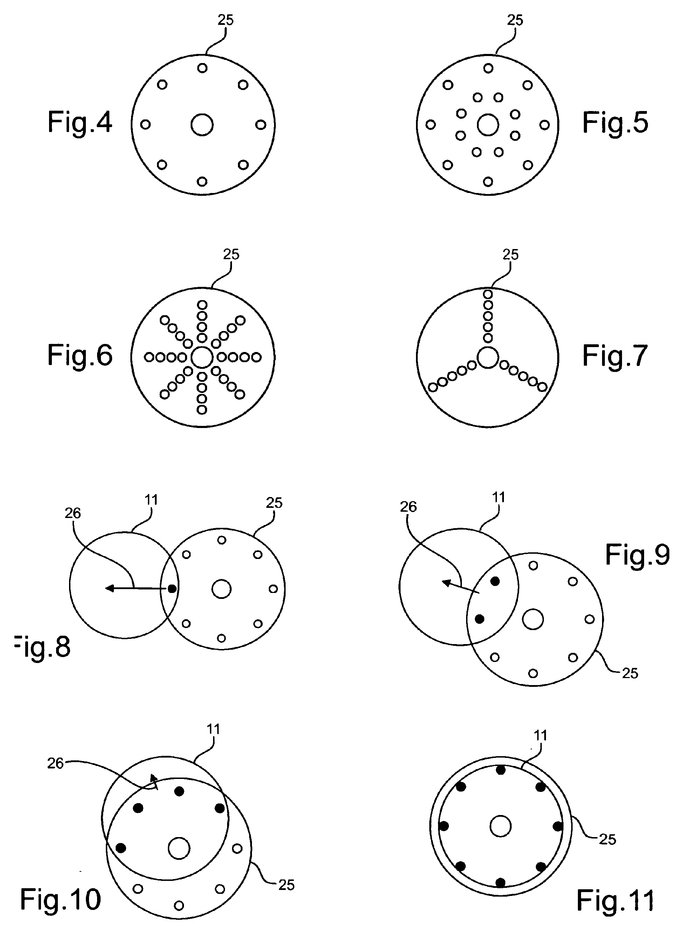

En fonction de la cible 11 à poursuivre, différentes configurations d'empreintes laser 25 peuvent être envisagées, comme illustré sur les figures 4 à 7.

Les figures 8 à 11 présentent différentes positions entre la cible 11 et une telle empreinte laser 25, avec un vecteur erreur de position 26 associé.

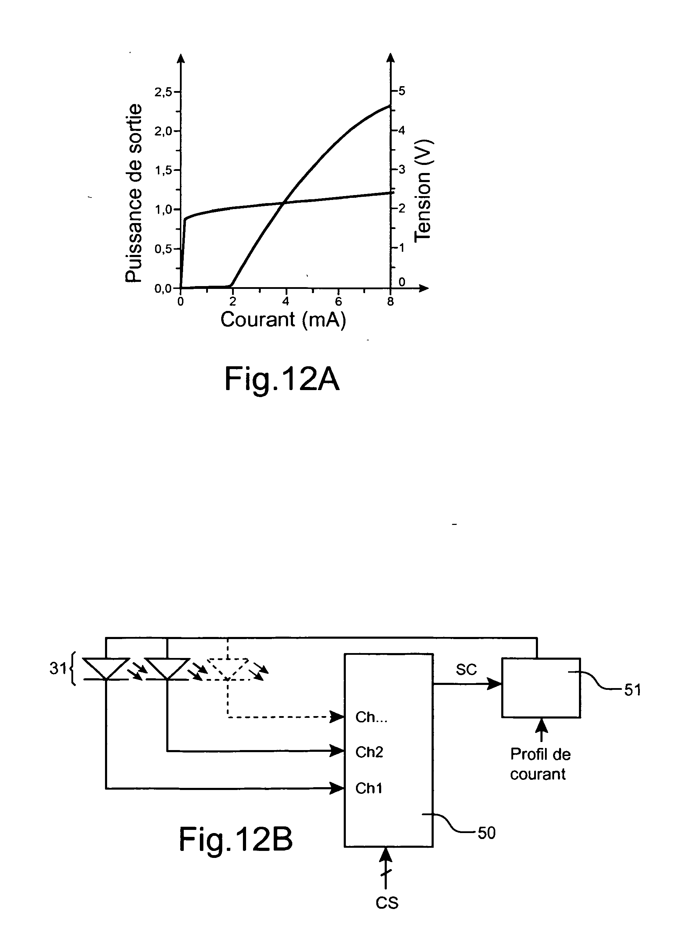

La figure 12B présente un schéma électrique du multiplexage 50 des diodes laser 31 avec un « driver » (dispositif de commande) de courant 51. En effet, étant donné la grande variation de courant illustrée sur la figure 12A qui se produit en fonction de la tension, une approche régulation de courant est bien adaptée pour gérer une puissance optique stable. Une caractéristique principale des matrices de type VCSEL réside en un courant de commutation faible proche de 2 mA, qui implique un montage de régulation d'ajustage fin. On utilise donc un amplificateur opérationnel en mode de régulation courant comme « driver » de courant 51. Les moyens de commutation série sont tels qu'une seule diode laser est mise en circuit à la fois. Afin de réduire la complexité, la taille et un ajustage fastidieux, le « driver » de courant 51 est suivi par un multiplexeur analogique 50 fournissant le signal à toutes les diodes laser 31, CS étant le sélectionneur de canal, SC le canal sélectionné, comme illustré sur la figure 12B.

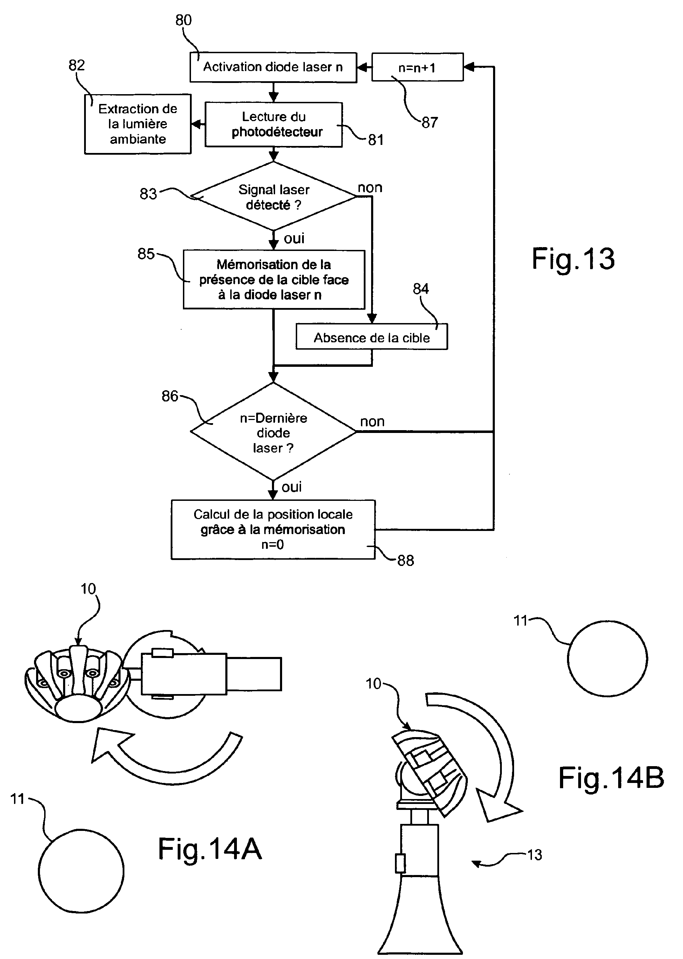

La figure 13 présente un algorithme de traitement de la tête optique.

Cet algorithme permet de prendre en compte chacune des diodes laser de la matrice. On a ainsi les étapes successives suivantes :
- activation d'une diode laser numéro n (module 80),
- lecture du photodétecteur central (module 81), avec extraction de la lumière ambiante (module 82),
- test pour savoir si un signal laser a été détecté (module 83), avec absence de cible (module 84) si la réponse est non,
- mémorisation de la présence d'une cible face à la diode laser n si la réponse est oui (module 85),
- vérification pour savoir si la diode n est la dernière diode à prendre en compte (module 86), avec addition n=n+1 (module 87) si la réponse est non,
- calcul de la position locale grâce à la mémorisation et remise à zéro de n (module 88) si la réponse est oui.

### Poursuite (« tracking ») globale

Dans le premier mode de réalisation, le dispositif de l'invention comprend une base mobile 13 de type « tilt/pan » qui a pour fonction l'orientation de la tête optique 10 afin de réaliser une poursuite avec un plus grand champ.

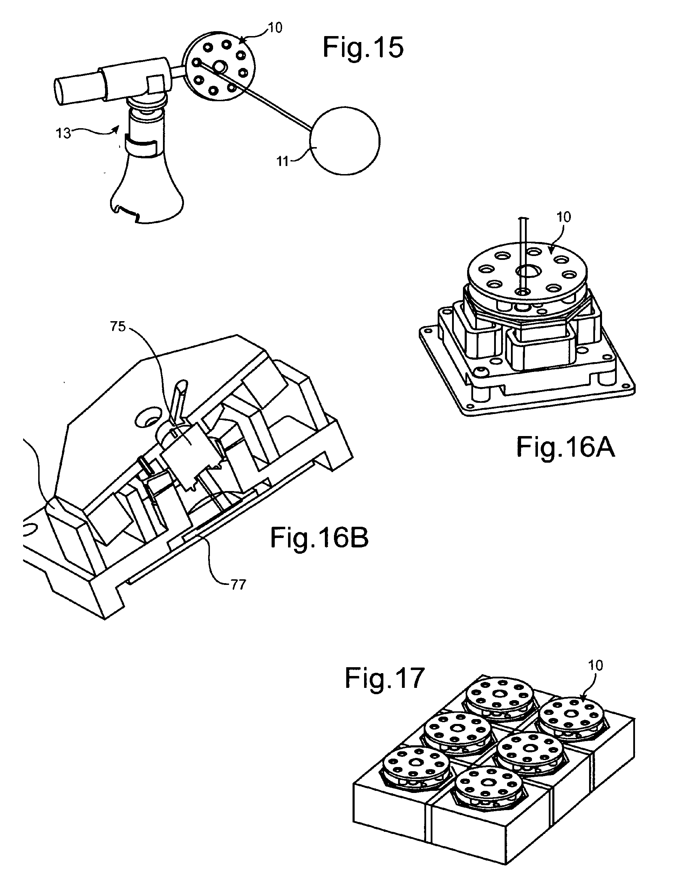

La configuration cinématique « tilt/pan » permet de donner deux degrés de liberté en rotation à la tête optique 10, comme illustré sur les figures 14A et 14B. Cette configuration permet la scrutation d'un volume hémisphérique comme illustré sur la figure 15. Les actionneurs choisis peuvent être deux motoréducteurs à courant continu.

Les figures 16A et 16B présentent un second mode de réalisation possible avec une plateforme à deux degrés de liberté à actionneur électromagnétique. La tête optique 10 est orientée selon deux degrés de rotation autour d'une liaison mécanique de type cardan et sa position est contrôlée grâce à un faisceau laser collimaté sur un détecteur de position de type PSD (« Position Sensitive Detector »). Sur ces figures sont ainsi représentés une diode laser 75, un actionneur 76 et un capteur de position 77. La figure 17 présente une configuration en matrice de plateformes ainsi illustrées sur les figures 16A et 16B permettant la capture simultanée de position de plusieurs cibles.

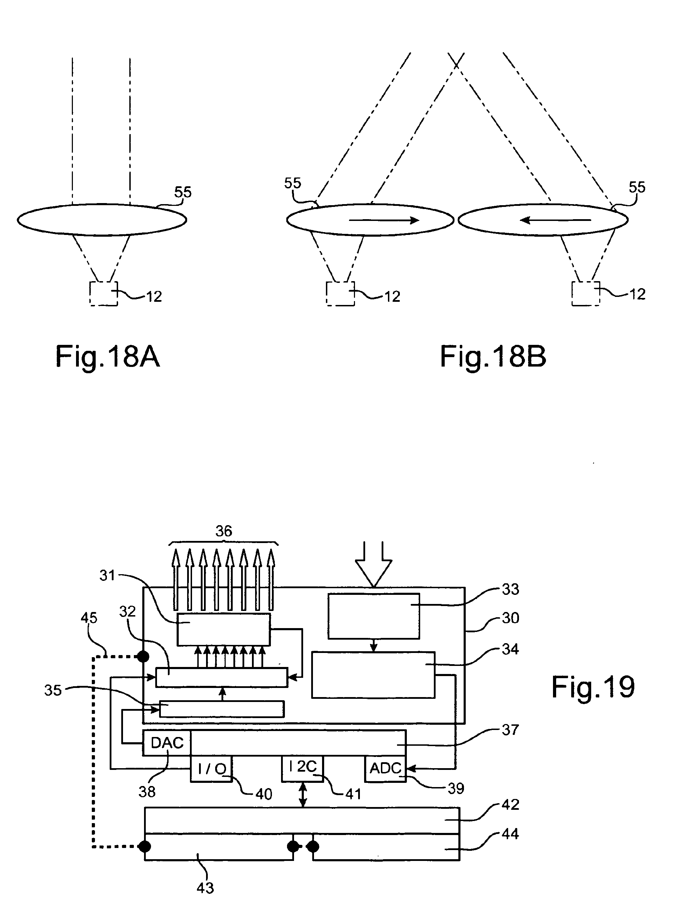

Dans une variante de réalisation, illustrée sur les figures 18A et 18B, le dispositif de l'invention comprend une matrice de lentilles 55 positionnées devant les diodes lasers 12 apte à se déplacer linéairement et selon des axes XY, dans le plan perpendiculaire aux sources lasers. De tels déplacements sont très faibles, et permettent de choisir l'inclinaison des sources lasers. L'actionnement de cette matrice de lentilles peut être électromagnétique, piézoélectrique, magnétostrictif, bilame thermique, alliages à mémoire de forme, ...

Une architecture générale, illustrée sur la figure 19, de l'électronique du premier mode de réalisation du dispositif de l'invention, illustré sur la figure 1, comprend :
- la tête optique 30, qui comporte :
   - plusieurs diodes laser 31, ici huit, délivrant des faisceaux laser 36,
   - un multiplexeur analogique 32,
   - une photodiode PIN 33,
   - un amplificateur et inverseur de transimpédance 34,
   - un circuit de commande (ou « driver ») des diodes laser 35,
- un microcontrôleur 37,
- un convertisseur numérique-analogique 38,
- un convertisseur analogique-numérique 39,
- un module d'entrée/sortie digital 40,
- un module de communication par exemple I2C 41,
- un circuit de commande (« driver ») de régulation et de puissance 42,
- un motoréducteur (moteur DC) « tilt » 43,
- un motoréducteur (moteur DC) « Pan » 44, avec une liaison mécanique 45 entre la tête optique 30 et ces moteurs 43 et 44.

Le microcontrôleur 37 gère toutes les interactions entre les différents modules illustrés sur la figure 19. La ressource logicielle est divisée en deux tâches de telle sorte que :
- le microcontrôleur 37 gère la tête optique 30 en modulant le courant des diodes laser. Ce fonctionnement est répété pour chaque diode en décalant le canal du multiplexeur analogique 32 ;
- le microcontrôleur 37 gère la stratégie de régulation globale, ce qui consiste à traiter un algorithme PID. Les commandes faible niveau sont envoyées avec un protocole I2C à l'étage de régulation de la base mobile.

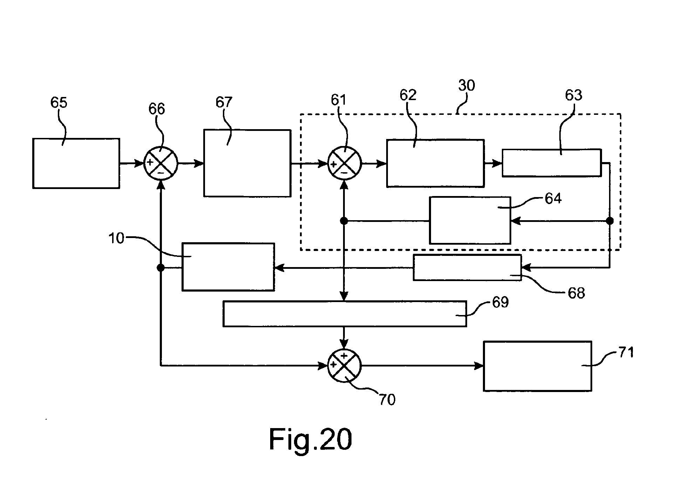

La figure 20 schématise deux boucles d'asservissement pour le contrôle des deux actionneurs.

La première boucle 60 est une boucle fermée de vitesse angulaire rafraîchie chaque 0,5 ms pour contrôler la dynamique de la base mobile. Elle comprend :
- un soustracteur 61,
- un contrôleur PID 62 nécessaire pour maintenir la stabilité et minimiser l'erreur,
- des moteurs DC 63,
- un codeur angulaire 64.

La seconde boucle, rafraîchie chaque 5 ms, utilise la tête optique 10 comme un capteur de position pour piloter la base mobile 13. Sur la figure 19 sont ainsi représentés :
- la position cible 65,
- un soustracteur 66,
- un module contrôleur PID et 1/Ko 67,
- la tête de scrutation 10,
- un module Ko=f (profondeur ou depth) 68,
- un module Ko2=f (profondeur et codeur angulaire) 69,
- un sommateur 70,
- une position mesurée 71.

La position cible 65 représente l'entrée désirée. La sortie du système est la position mesurée 71. Cette valeur est composée de la position angulaire absolue donnée par les codeurs et l'erreur de position mesurée par la tête optique 10.

### REFERENCES

[1] US 2006/0222314
[2] « Laser-Based Finger Tracking System Suitable for MOEMS Integration » de Stéphane Perrin, Alvaro Cassinelli et Masatoshi Ishikawa (Université de Tokyo, Ishikawa Hashimoto Laboratory, novembre 2003)
[3] « Gesture Recognition Using Laser-Based Tracking System » de Stéphane Perrin, Alvaro Cassinelli et Masatoshi Ishikawa (Université de Tokyo, Ishikawa Hashimoto Laboratory, IEEE 2004))
[4] US 5,325,386
[5] « Laser Range Finder based on Fully Digital Phase-Shift Measurement" de S. Poujouly, S. Journet et B. Miller (1999, LESiR/ENS Cachan, France IEEE).

## Revendications

1. Dispositif de mesure de la position d'au moins un objet en mouvement dans un repère à trois dimensions, comprenant:
- au moins une tête optique (10) qui comprend une matrice de sources laser (12) indépendantes délivrant des faisceaux laser collimatés, disposées autour d'un photodétecteur central à une seule cellule sensible (14),
- au moins une base mobile à deux degrés de liberté en rotation à laquelle cette matrice est fixée,
- une électronique de commande comprenant :
- des moyens de commutation série des sources laser pour localiser l'objet, **caractérisé en ce que** l'électronique de commande comprend:
- des moyens d'ajustement continu des angles de la base mobile dans lesdits degrés de liberté pour aligner le centre du photodétecteur avec le centre de l'objet en centrant l'empreinte formée sur l'objet.

2. Dispositif selon la revendication 1, dans lequel la base mobile comprend deux motoréducteurs (13) montés en configuration « tilt/pan ».

3. Dispositif selon la revendication 1, dans lequel la base mobile comprend une liaison mécanique de type cardan.

4. Dispositif selon la revendication 3, qui comprend une matrice de bases mobiles.

5. Dispositif selon la revendication 1, dans lequel la matrice de source laser est une matrice de type VCSEL.

6. Dispositif selon la revendication 1, dans lequel les sources laser (12) sont des diodes laser.

7. Dispositif selon la revendication 1, dans lequel la tête optique (10) comprend :
- des diodes laser (12) collimatées,
- une photodiode (21),
- un multiplexeur analogique (32),
- un amplificateur et inverseur de transimpédance (34),
- un circuit de commande (35).

8. Dispositif selon la revendication 1, dans lequel l'électronique de commande comprend :
- un microcontrôleur (37),
- un convertisseur numérique-analogique (38),
- un convertisseur analogique-numérique (39),
- un module d'entrée/sortie digital(40),
- un module de communication (41),
- un circuit de commande de régulation et de puissance (42).

9. Dispositif selon la revendication 1, qui comprend une matrice de lentilles (55) positionnée devant la matrice de sources laser (12) et déplaçable linéairement devant celle-ci.

10. Procédé de mesure de la position d'au moins un objet en mouvement dans un repère à trois dimensions à l'aide d'un dispositif de mesure de la position de cet au moins un objet comprenant :
- au moins une tête optique (10) qui comprend une matrice de sources laser (12) indépendantes délivrant des faisceaux laser collimatés, disposées autour d'un photodétecteur central à une seule cellule sensible (14),
- au moins une base mobile à deux degrés de liberté en rotation à laquelle cette matrice est fixée, comprenant en outre:
- une étape de scrutation statique et locale avec commutation des sources lasers pour localiser l'objet,
**caractérisé en ce qu'**il comprend:
- une étape de poursuite globale ce cet au moins un objet assurée par la consultation des deux axes d'une base mobile, dans lesdits degrés de liberté, de ladite matrice pour ajuster en continu les angles de cette base mobile afin d'aligner le centre du photodétecteur avec le centre de l'objet en centrant l'empreinte formée sur l'objet.

11. Procédé selon la revendication 10, qui comprend, en outre :
- une étape de mesure de profondeur réalisée à l'aide d'une méthode de télémétrie par temps de vol.

12. Procédé selon la revendication 10, dans laquelle la matrice est une matrice VCSEL.

13. Procédé selon la revendication 10, dans lequel la base mobile est du type « tilt/pan ».

14. Procédé selon la revendication 10, qui comprend une étape de déplacement linéaire d'une matrice de lentilles (55) devant la matrice de sources laser.

## Patentansprüche

1. Vorrichtung zur Messung der Position von mindestens einem sich bewegenden Objekt in einem dreidimensionalen Bezugssystem, umfassend:
- mindestens einen optischen Kopf (10), der eine Matrix von unabhängigen, kollimierte Laserstrahlenbündel liefernden Laserquellen (12), die um einen zentralen Fotodetektor mit einer einzigen empfindlichen Zelle (14) herum angeordnet sind, umfasst,
- mindestens eine, in zwei Rotationsfreiheitsgraden bewegliche Basis, an der diese Matrix befestigt ist,
- eine Steuerelektronik, die umfasst:
Mittel zum seriellen Wechseln der Laserquellen zur Lokalisierung des Objekts,
**dadurch gekennzeichnet, dass** die Steuerelektronik Mittel zur kontinuierlichen Anpassung der in den Freiheitsgraden beweglichen Basis zum Ausrichten des Zentrums des Fotodetektors auf das Zentrum des Objekts unter Zentrieren des auf dem Objekt gebildeten Ausleuchtungsbereichs umfasst.

2. Vorrichtung nach Anspruch 1, wobei die bewegliche Basis zwei Stellmotoren (13) umfasst, die in der Konfiguration "Kippen/Schwenken" angebracht sind.

3. Vorrichtung nach Anspruch 1, wobei die bewegliche Basis eine mechanische Verbindung des Kardangelenktyps aufweist.

4. Vorrichtung nach Anspruch 3, die eine Matrix von beweglichen Basen aufweist.

5. Vorrichtung nach Anspruch 1, wobei die Laserquellenmatrix eine Matrix des Typs VCSEL ist.

6. Vorrichtung nach Anspruch 1, wobei die Laserquellen (12) Diodenlaser sind.

7. Vorrichtung nach Anspruch 1, wobei der optische Kopf (10) umfasst:
- kollimierte Diodenlaser (12),
- eine Fotodiode (21),
- einen Analog-Multiplexer AM (32),
- einen Übertragungsimpedanzverstärker und -inverter (34),
- einen Treiber (35).

8. Vorrichtung nach Anspruch 1, wobei die Steuerelektronik umfasst:
- einen Mikrocontroller (37),
- einen Digital/Analog-Wandler (38),
- einen Analog/Digital-Wandler (39),
- ein digitales Eingangs-/ Ausgangs-Modul (40),
- ein Kommunikationsmodul (41),
- einen Treiber für die Regelung und Leistungsversorgung (42).

9. Vorrichtung nach Anspruch 1, die eine Linsenmatrix (55) aufweist, die vor der Matrix von Laserquellen (12) positioniert ist und vor dieser linear verschiebbar ist.

10. Verfahren zur Messung der Position von mindestens einem sich bewegenden Objekt in einem dreidimensionalen Bezugssystem mittels einer Vorrichtung zur Messung der Position von diesem mindestens einen Objekt, die umfasst:
- mindestens einen optischen Kopf (10), der eine Matrix von unabhängigen, kollimierte Laserstrahlenbündel liefernden Laserquellen (12), die um einen zentralen Fotodetektor mit einer einzigen empfindlichen Zelle (14) herum angeordnet sind, aufweist,
- mindestens eine in zwei Rotationsfreiheitsgraden bewegliche Basis, an der diese Matrix befestigt ist,
wobei das Verfahren ferner einen Schritt der statischen und lokalen Abtastung mit Wechseln der Laserquellen zum Lokalisieren des Objekt aufweist,
**dadurch gekennzeichnet, dass** das Verfahren einen Schritt des globalen Verfolgens von diesem mindestens einen Objekt aufweist, der durch das Untersuchen der beiden Achsen einer in den Freiheitsgraden beweglichen Basis der Matrix gewährleistet ist, um kontinuierlich die Winkel dieser beweglichen Basis anzupassen, um das Zentrum des Fotodetektors auf das Zentrum des Objekts unter Zentrieren des auf dem Objekt gebildeten Ausleuchtungsbereichs auszurichten.

11. Verfahren nach Anspruch 10, das ferner einen Schritt zur Messung der Tiefe, der mittels eines Flugzeit-Telemetrieverfahrens realisiert wird, umfasst.

12. Verfahren nach Anspruch 10, wobei die Matrix eine VCSEL-Matrix ist.

13. Verfahren nach Anspruch 10, wobei die bewegliche Basis eine des Typs "Kippen/Schwenken" ist.

14. Verfahren nach Anspruch 10, das einen Schritt der linearen Verschiebung einer Matrix von Linsen (55) vor der Matrix von Laserquellen aufweist.

## Claims

1. Device for measuring the position of at least one moving object in a three-dimensional grid, comprising:
- at least one optical head (10) comprising an independent laser source array (12) outputting collimated laser beams, arranged about a central photodetector with a single sensitive cell (14),
- at least one movable base with two rotational degrees of freedom whereto said array is secured,
- control electronics comprising:
- serial laser source switching means for tracking the object, **characterized in that** the control electronics comprises:
- means for continuously adjusting the angles of the movable base in said degrees of freedom to align the centre of the photodetector with the centre of the object in centring the inprint formed on the object.

2. Device according to claim 1, wherein the movable base comprises two geared motors (13) mounted in a "tilt/pan" configuration.

3. Device according to claim 1, wherein the movable base comprises a universal joint type mechanical link.

4. Device according to claim 3, comprising a movable bases array.

5. Device according to claim 1, wherein the laser sources array is a VCSEL array.

6. Device according to claim 1, wherein the laser sources (12) are laser diodes.

7. Device according to claim 1, wherein the optical head (10) comprises:
- collimated laser diodes (12),
- a photodiode (21),
- an analog multiplexer (32),
- a transimpedance amplifier and inverter (34),
- a control circuit (35).

8. Device according to claim 1, wherein the control electronics comprise:
- a microcontroller (37),
- a digital-analog converter (38),
- an analog-digital converter (39),
- a digital input/output module (40),
- a communication module (41),
- a regulation and power control circuit (42).

9. Device according to claim 1, comprising a lenses array (55) positioned in front of the laser sources array (12) and movable in a linear manner in front of same.

10. Method for measuring the position of at least one moving object in a three-dimensional grid using a device for measuring the position of said at least one object comprising:
- at least one optical head (10) comprising an independent laser sources array (12) outputting collimated laser beams, arranged about a central photodetector with a single sensitive cell (14),
- at least one movable base with two rotational degrees of freedom whereto said array is secured, further comprising:
- a static and local scanning step with laser sources switching for tracking the object, **characterized in that** it comprises:
- an overall tracking step of said at least one object performed by consulting both axes of a movable base of said array in said degrees of freedom to continuously adjust the angles of said movable base in order to align the centre of the photodetector with the centre of the object in centring the inprint formed on the object.

11. Method according to claim 10, further comprising:
- a step for measuring depth carried out using a time-of-flight telemetry method.

12. Method according to claim 10, wherein the array is a VCSEL array.

13. Method according to claim 10, wherein the movable base is "tilt/pan" type.

14. Method according to claim 10, comprising a linear movement step of a lenses array (55) in front of the laser sources array.
